# EUROPEAN PATENT APPLICATION

(11) **EP 1 220 118 A2**
(43) Date of publication of application: **03.07.2002**
(21) Application number: 01310894.9
(22) Date of filing: 27.12.2001
(51) Int. Cl.: G06F 17/30, H04L 29/06

(54) **Content relay service for relay transferring web content on internet while reducing data amount**

(30) Priority: 28.12.2000 JP 2000402364
(71) Applicant: Media Do, Inc., Nagoya-shi, Aichi-ke (JP); Yonekura, Goushi, Ichinomiya-shi, Aichi-ken (JP)
(72) Inventor: Yonekura, Goushi, Ichinomiya-shi, Aichi-ken (JP)
(74) Representative: Exell, Jonathan Mark

(57) **Abstract**

A content relay service device for relay transferring a Web content while reducing the content's data amount. A user of a browser installed terminal subscribed to a communication service of a data amount charging type network connected to the Internet, is managed and registered as a member in a member information database of the device. An authentication procedure is carried out for the terminal, which makes access to the relay device. When the terminal of the member is authenticated, the Web content obtained on the Internet as specified by the terminal is processed by a data amount reducing mechanism, and a Web content after the processing is transmitted to the terminal. A data reduction achievement by the reducing mechanism is recorded while being correlated with the member of the database. Then, the data of the data reduction achievement for each member in the database is edited and outputted.

## Description

The present application claims priority upon Japanese Patent Application No. 2000-402364 filed on December 28, 2000, the contents of which are herein incorporated by reference.

### BACKGROUND OF THE INVENTION

### Field of the Invention

The present invention relates to a content relay service device for relay transferring a Web content on the Internet while reducing a data amount thereof. More specifically, the invention relates to a content relay service device designed for a browser installed terminal, which is subscribed to a communication service of a data amount charging type network linked with the Internet.

### Description of the Related Art

At present, an enormous number of Web contents (Web pages, image data, voice data, and the like) are open to the public on the Internet. A large characteristic of WWW which is a main mechanism of the Internet is that "Hyperlink" embedded in a Web page can connect information held in computers managed by different people to one another and process them. A computer provided with a function of returning a Web content to a computer which makes access by specifying a URL, the Web content being present in a data storage position equivalent to the URL, is a WWW server. Software in which a computer connected to the Internet obtains a Web content by using the WWW mechanism, and executes proper processing according to the data format of such content, is a browser. If the obtained Web content is a Web page, then its document is displayed to be read.

At present, there are various types of computer equipment loaded with browsers (browser installed terminals), from a general personal computer (PC) to a portable telephone set. Especially, the portable telephone is an equipment to be always carried around, and its Internet access function has characteristics different from that of the Internet access function mainly of a conventional PC, such as:
- The Internet can be used anywhere within the reach of radio waves;
- Little time and labor are necessary to set up an Internet connection environment in the equipment unlike in the PC;
- Electronic mail can be transmitted even when there are no requests from the portable telephone set side.

These characteristics are accepted by many users and at present, the number of users of the browser loaded portable telephone sets (hereinafter simply referred to as portable telephone sets) has reached over 20 million.

The general Internet user pays data communication fees to an internet provider or a mobile common carrier, to which the user subscribes. With respect to a charging system of the data communication fees, there are a fixed amount charging system in which use is unlimited, a time-dependent amount charging system for charging fees according to the time of data communications, and a data amount charging system for charging fees according to the data amount actually transmitted/received through data communications.

Currently, most of data communication services targeting a mobile browser installed terminal such as a portable telephone set employ the data amount charging system. Accordingly, the majority of portable telephone set users pay data communication fees based on the data amount charging system. Many models of recent portable telephone sets comprise color displays. Even a Web page for the portable telephone set may include a color image of a large data amount in many cases. Further, there is a model equipped with a function of downloading music data compliant with the MP3 Standard, and decoding the data, thus bringing the browser function in the portable telephone set closer to that in a general PC. Thus, compared with the conventional Web page mainly with a text, there is a tendency of conspicuous increase in the data amount to be downloaded. Accordingly, the majority of portable telephone set users must pay much more data communication fees because of the multifunction/high performance of the portable telephone set and the increased data amount of the Web content itself. Needless to say, even in a case of using the Internet in an environment where a normal portable telephone set is connected to a notebook type PC, there arises a similar problem that data communications fees are high.

Apparently, devices or services easily come to mind, which obtain a Web content on the Internet requested by a browser installed terminal in place of the terminal, and reduce the data amount of such content then relay transfer the content to the browser installed terminal. However, it is hard to believe that the content relay services are all rendered free of charge. Such services will probably not appear unless the service rendering provides certain returns, and pays as a business.

Thus, an object of the present invention is to provide a content relay service device designed to make a successful business model of a service for relay transferring a Web content on the Internet to a browser installed terminal, which is subscribed to communication services of a data amount charging type network, while reducing a data amount of the Web content.

### SUMMARY OF THE INVENTION

In order to achieve the foregoing and other objects, in accordance with one aspect of the present invention, a content relay service device for relay transferring a Web content opened to the public on the Internet while reducing a data amount thereof is provided. The device comprises a computer information processing system connected to the Internet.

The content relay service device manages a member information database in which a member is registered, and the member is a service receiver who uses a browser installed terminal subscribed to a communication service of a data amount charging type network connected to the Internet.

The content relay service device communicates with the browser installed terminal of the member which makes access thereto to authenticate the browser installed terminal. The authentication is performed by a predetermined authentication procedure with reference to the member information database.

A Web content "C" specified by the browser installed terminal "B" of the member "A" is obtained from the Internet. The obtained Web content "C" is processed by a data amount reducing mechanism, and a Web content "D" thus processed is transmitted to the browser installed terminal "B."

A data reduction achievement is calculated when the Web content "C" is processed by the data amount reducing mechanism to be converted into the Web content "D," and data of the data reduction achievement is recorded while being correlated with the member "A" of the member information database. The data of the data reduction achievement for each member recorded in the member information database is edited and outputted in a predetermined manner.

In accordance with another aspect of the present invention, a content relay service device for relay transferring a Web content opened to the public on the Internet while reducing a data amount thereof is provided. The device comprises a computer information processing system connected to the Internet.

A service receiver is a user of a browser installed terminal subscribed to a communication service of a data amount charging type network connected to the Internet.

The content relay service device communicates with the browser installed terminal of the user which makes access thereto to authenticate the browser installed terminal in which the user is a temporary member. The authentication is performed by a predetermined authentication procedure based on personal information of the user, obtained through the communication.

A Web content "C" specified by the browser installed terminal "B" of the temporary member "A" is obtained from the Internet. The obtained Web content "C" is processed by a data amount reducing mechanism, and a Web content "D" thus processed is transmitted to the browser installed terminal "B."

A data reduction achievement is calculated when the Web content "C" is processed by the data amount reducing mechanism to be converted into the Web content "D," and the data of the data reduction achievement is edited and outputted in a predetermined manner.

### BRIEF DESCRIPTION OF THE DRAWINGS

For more complete understanding of the present invention and the advantages thereof, reference is now made to the following description taken in conjunction with the accompanying drawings wherein:
Fig. 1 is a structural view showing a network including a content relay service device according to an embodiment of the present invention; and
Fig. 2 is a view showing communication processes of the embodiment, between a portable telephone set and a WWW server.

### DETAILED DESCRIPTION OF THE PREFERRED EMBODIMENTS

In accordance with yet another aspect of the invention, the data of the data reduction achievement is edited in a reduction achievement report of a Web document form, and the reduction achievement report regarding the member "A" is presented according to a request from the browser installed terminal "B."

In accordance with further aspect of the invention, as a data reduction achievement when the Web content "C" is processed by the data amount reducing mechanism to be converted into the Web content "D," communication fees in the data amount charging type network corresponding to the reduced data amount is calculated.

In accordance with another aspect of the invention, the content device further comprises a specification information obtaining mechanism for obtaining specification information regarding a function provided in the browser installed terminal through communications with the terminal, which makes access, and a terminal differentiating mechanism for differentiating the terminal into a type "a" loading a predetermined compressed data decompression program, and a type "b" loading no compressed data decompression program based on the specification information obtained from the browser installed terminal. The data amount reducing mechanism reduces a data amount of the Web content based on a system needing no compressed data decompression program for the browser installed terminal of the type "a," and reduces a data amount of the Web content based on a system including a predetermined compression algorithm for the browser installed terminal of the type "b."

In accordance with yet another aspect of the invention, the content relay service device further comprises a program sending mechanism for sending the compressed data decompression program to the browser installed terminal, which makes access. The terminal differentiating mechanism differentiates a terminal capable of loading the compressed data decompression program from the browser installed terminal of the type "a," and the compressed data decompression program is downloaded for the differentiated terminal by the program sending mechanism.

In accordance with further aspect of the invention, the content relay service device further comprises a cache mechanism for saving the Web content "D" before data amount reduction processing for a predetermined period, and a transmission mechanism for transmitting the Web content "D" saved in the cache mechanism when a certain browser installed terminal which makes access after authentication specifies the Web content "C" which is an origin of the Web content "D."

### === Network Constitution ===

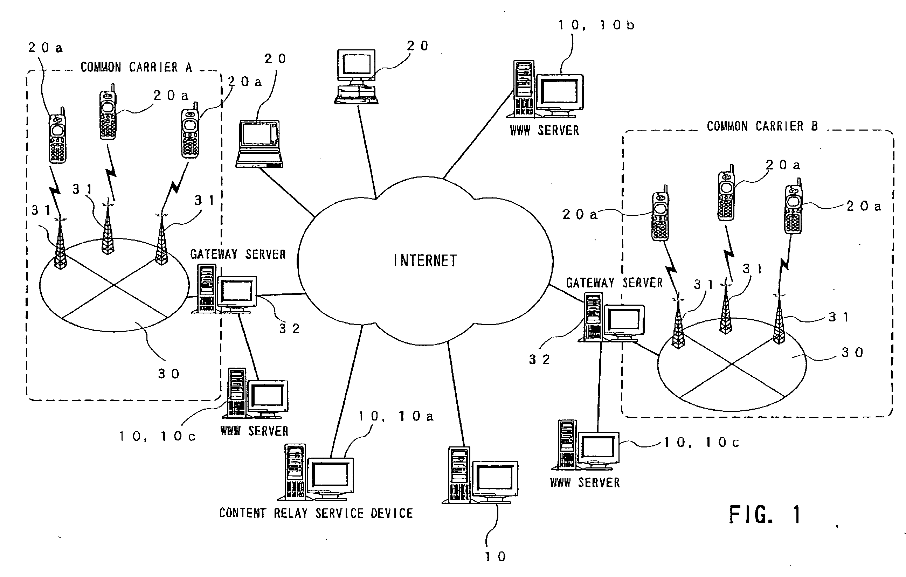

Fig. 1 is a structural view schematically showing the Internet including a content relay service device according to an embodiment of the present invention. A number of host computers 10 such as WWW servers 10b, and user terminals 20 such as personal computers used by a number of unspecified users are organically connected to the Internet.

A portable telephone set 20a is also connected to the Internet as one of the user terminals. Specifically, the portable telephone set 20a is connected to a radio base station 31 through an air interface, thus being connected to a mobile radio communications network 30 of a mobile common carrier, to which the telephone set is subscribed. Further, the portable telephone set 20a is connected to the Internet through a gateway server 32 controlled/operated by each mobile common carrier.

When the portable telephone set 20a sends an HTTP request including a predetermined URL to the mobile radio communications network 30, a data packet is transmitted, from a terminal ID intrinsic to the portable telephone set 20a as a caller, to the gateway server 32. The gateway server 32 correlates the terminal ID included in this packet with one of the IP addresses the gateway server 32 holds, and allocates the IP address to this portable telephone set 20a. Then, the HTTP request transmitted from the IP address is transferred to the Internet. Needless to say, there is a WWW server 10c, which is connected through a private line to the gateway server 32. In the case of an HTTP request addressed to this WWW server 10c, the HTTP request can be directly sent to the WWW server 10c without going through the Internet.

When a Web content specified by the URL is transmitted from the Internet or the WWW server 10c connected through the private line to the gateway server 32 as an HTTP response addressed to the IP address of the caller, the gateway server 32 sends the HTTP response to the mobile radio communications network 30, the HTTP response being addressed to the terminal ID correlated with the IP address. Thus, the Web content is transmitted to the portable telephone set 20a.

Further, the gateway server 32 obtains the data amount passed through the gateway server 32 itself for each terminal ID. The obtained data amount correlated with the terminal ID is then sent to a charging business computer of the mobile common carrier. The charging business computer is provided to charge call fees or data communication fees for each portable telephone set 20a, and the charging business computer totals the data amount of each terminal ID received from the gateway server 32 for a predetermined period such as one month, and calculates an amount of money to be charged to each terminal user. The mobile common carrier carries out an actual charging and collecting business such as deduction from a bank account, payment by credit card, or the like, based on the above calculated charging amount.

The normal Web content obtaining route by the portable telephone set 20a and the communication fee calculation process based on the data amount charging system are as described above. Next, description will be made for services provided by the content relay service device 10a of this embodiment.

### === Content Relay Service Device ===

The content relay service device 10a of this embodiment has a basic function as a WWW server for opening to the public a Web page on the Internet for a portable telephone set 1. Corresponding to a plurality of mobile radio communications network services, Web pages such as C-HTML, HDML, WML, and the like, are prepared, which are described in a markup language compliant with Standard of the portable telephone set 20a for each mobile common carrier. Thus, for the Web page of a given content, a Web page described in a different language is specified by a different URL. To obtain a Web page from this content relay service device 10a, the portable telephone set 20a properly selects a URL according to the mobile common carrier, to which the portable telephone set 20a itself belongs to. Thus, a Web page to be read by the portable telephone set 1 is transmitted.

However, the essence of the content relay service device 10a is not the WWW server function, but a "data amount reduced transfer function" provided in a distribution channel, through which the portable telephone set 20a obtains a Web content from the other WWW server 10b or the like. This data amount reduced transfer function obtains the Web content in place of the portable telephone set 20a, reduces the data amount thereof, and then transfers the Web content to the portable telephone set 20a. The content relay service device 10a of this embodiment regards users of the portable telephone sets 20a as service target members, and manages a name, a contact address, authentication information, and the like, for each member in a member information database. Various CGI specified by URL are mounted, and the data amount reduced transfer function is realized by the CGI working with the WWW server function.

### === Service Type ===

Now, it is assumed that as one example of a service type provided by the content relay service device 10a of this embodiment, a subscriber of the data amount charging type network service uses the portable telephone set 20a as the browser installed terminal, and obtains a Web content opened to the public in the WWW server on the Internet by using the browser function of the portable telephone set 20a.

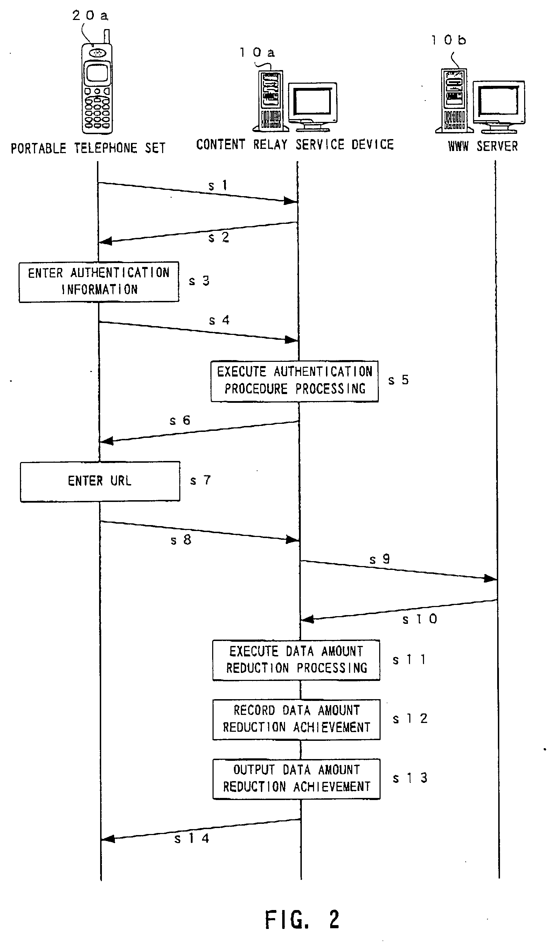

Fig. 2 is a view of communication processes showing a communication process carried out among the content relay service device 10a, the WWW server 10b and the portable telephone set 20a under the foregoing assumption, which is followed by the execution of various information processing operations.

### < Authentication Procedure >

When the portable telephone set 20a specifies a predetermined URL, and accesses the content relay service device 10a, the content relay service device 10a returns a Web page for an authentication procedure, which includes an input form of authentication information such as a member ID, a password or the like (s1, s2). At the portable telephone set 20a, the member ID or the password is entered in a predetermined form (s3), and this form is returned to the content relay service device 10a (s4). The CGI at the return side inquires about the authentication information written by the portable telephone set 20a in the member information database. when finding target member information, the CGI recognizes this portable telephone set as the member's set, and executes processing for transmitting a Web page including a URL input form to the portable telephone set 20a (s5).

### === Acquisition of Web Content and Data Amount Reduction Processing ===

The Web page including the URL input form is transmitted to the portable telephone set 20a (s6), and the URL of a given Web content is written in a form at the portable telephone set 20a (s7). After the URL written form is returned to the content relay service device 10a (s8), a Web content specified by the URL is obtained from the corresponding WWW server 10b (s9, s10). Then, the data structure of the obtained Web content is analyzed and processed, and the data amount thereof is properly reduced (s11).

In this embodiment, mainly image data is targeted for data amount reduction. For example, in the case of JPEG data having a low compression rate, the data amount is reduced by reconverting the data into image data having an increased compression rate in the same JPEG form, or converting the image data of the JPEG form into the data of a GIF form. Accordingly, the image data, of which data amount is reduced, can be displayed independent of a model of the portable telephone set,

It is also possible to convert color image data into monochromatic image data by recognizing that the portable telephone set 20a which has made access is not provided with a color display. Specifically, the model of the portable telephone set 20a which has made access is specified, and a display type is specified from the model of the portable telephone set 20a. As is well known, when the portable telephone set 20a carries out data communications, the header of the data packet thereof has data to specify a mobile common carrier, to which it belongs, the model of the portable telephone set, and the like. Thus, by managing a table correlating the model of the portable telephone set with the type of the display at the content relay service device 10a side, the display type of the portable telephone set 20a which has made access can be determined.

If the Web content specified by the portable telephone set 20a is an image data file itself, the image data, of which data amount is reduced, is directly relay transferred by the foregoing method, then the image data is accordingly transmitted to the portable telephone set 20a. If a Web page is specified as a Web content, and a color image is inserted into the Web page, the content relay service device 10a obtains the data of all images inserted into the Web page, reduces the data amount by executing proper data conversion, and stores the converted image data in a proper storage position. Then, the linking place of an image initially described in the Web page specified by the portable telephone set 20a is reset to specify its storage place, and described.

Moreover, regarding the Web page's main body, the data amount can be slightly reduced by removing unnecessary tags. If the storage position of the image data, of which data amount is reduced, is set identical to the storage position of the Web page's main body, it is not necessary to write a relative storage position (abc/def/ghi.gif, etc.) from the storage position of the Web page's main body in its description according to a directory structure when the image data is specified in the Web page. Thus, the image data can be specified directly by its file name. In other words, the data amount can be reduced by an amount equal to characters necessary for describing the directory structure. The data amount can also be reduced in this manner.

### < Calculation, Recording and Output of Data Amount Reduction Achievement >

The content relay service device 10a transmits the Web content, of which data amount is reduced, to the portable telephone set 20a (s14), obtains the data amount of the Web content from the WWW server 10b and the reduced data amount of the Web content, and records these data amounts as a data amount reduction achievement in correlation with the member information of the portable telephone set 20a (s12). Then, the data amount reduction achievement is properly edited, and the edited data thereof is outputted (s13). In this embodiment, calculation is made as to a difference in data amounts between before and after the data amount reduction processing, and the calculated difference is outputted to the portable telephone set 20a by being written in the relay transferred Web content (s13). Accordingly, the data amount reduction achievement is presented to the user (s14), appealing a service utility value. The data amount reduction achievement can also be presented to the user by writing the data amount reduction achievement in a separately prepared Web page, and setting a link to the Web page in the Web content.

Further in this embodiment, the content relay service device 10a manages information regarding a charging system for each mobile common carrier, and calculates data communication fees equivalent to a data amount reduced by a data amount reduced transfer service (the present service) based on the charging system of the mobile common carrier, to which a member is subscribed. The data amount reduction achievement is presented based on a difference in amounts between the case of using the present service and the case of not using the present service. Thus, a service utility value becomes quite obvious. Needless to say, the reduced data amount itself (number of bytes or the like) may be presented as a data amount reduction achievement.

### === other Embodiments and Modified Examples ===

### < Output Form of Data Amount Reduction Achievement >

In the foregoing embodiment, as the output form of the data amount reduction achievement, the form of outputting data to be presented to the member, e.g., a Web page, was described. Needless to say, a form of outputting to the operator side of the content relay service device 10a may be employed. For example, if predetermined fees for the use of the present service are collected from the member, the data amount reduction achievement may be properly outputted as information to be used for additional business operations concerning the present service, such as charging the member for service use fees, or calculation of the use fees. As an output form in such a case, the data amount reduction achievement may be outputted by displaying, printing, or the like if the additional business operations are carried out by a human operator. If another computer (e.g., computer for charge calculation) installed in the provider side of this service carries out the additional business operations, the data amount reduction achievement may be outputted to this computer in a proper data format.

### < Other Data Amount Reduction Systems >

In the foregoing embodiment, description was made for the capability of reducing the data amount by omitting the description portion of the directory structure equivalent to the storage position when the storage position of the image inserted into the Web page was specified. By further advancing the idea, a method is conceivable, which can reduce even the number of written characters for the description portion of a link to such as other Web sites set in the Web page. The method will be described as follows.

A URL (referred to as URL-A) indicating a link to other sites in the Web page is rewritten to be a URL (referred to as URL-B) of a certain storage position of the content relay service device. The URL-A is written in a "FULL NAME" starting with "http://," while the URL-B is written according to the above described directory structure. In this case, the URL-A and the URL-B are correlated with each other. For the URL-B, a Web content is obtained from the URL-A based on the correlation, and a CGI is disposed to pass the Web content to a CGI for executing data reduction processing. Thus, the Web content of the other site set in the Web page can also be transmitted to the portable telephone set after its data amount is reduced.

Therefore, the described method is greatly advantageous not only in that the data amount equivalent to the number of characters necessary for description of the URL can be reduced, but also in that since all the Web contents specified by the portable telephone set are relayed through the content relay service device, the total data amount to be reduced can become larger as "Net Surfing" is continued more.

### < Data Compression System >

The foregoing data reduction system can be applied in common to all portable telephone sets. However, a portable telephone set provided with a JAVA execution environment has appeared. In this case, an existing data compression technology can be directly applied by incorporating the decompression software of compressed data as a JAVA program in the portable telephone set of such a type. Thus, a content relay service device for switching a data amount reduction system according to a model of a portable telephone set will be exemplified below.

It is assumed that if the user of the portable telephone set provided with the JAVA execution environment has been registered as a member of the present service, a JAVA program for executing compressed data decompression processing has already been loaded in the portable telephone set. In other words, during a member registration procedure, the JAVA program is distributed by a proper method such as downloading, and loaded in the portable telephone set. If the portable telephone set includes a memory card slot, the JAVA program can be installed by a memory card storing the decompression program.

The member operates the portable telephone set, and starts the loaded decompression program. In response to the start, information is added to the program, indicating that access has been made by the decompression program, and then the program is connected to the content relay service device. After recognizing that the access is from the decompression program, regarding the Web content specified by the portable telephone set, the content relay service device compresses data by a compression system suited to the decompression program, in place of "data reduction processing" for deleting or changing a part of data, and then transfers the compressed data to the portable telephone set. Regarding the data compression processing, a data amount is further reduced if data compression is carried out after a data amount before compression is reduced by previous data reduction processing.

### <Distribution of Compressed Data Decompression Program>

For example, it is assumed that a member having a normal portable telephone set of no JAVA execution environment changes the telephone set to a model provided with the JAVA execution environment. In this case, irrespective of the JAVA execution environment, an efficient data amount reduction service based on the above-described data compression cannot be utilized. Thus, by enabling the decompression program to be downloaded in the telephone set when the telephone set is determined to be a model capable of loading the decompression program depending on the model data obtained from the portable telephone set which made access, it is possible to obtain a Web content by the compressed data of a smaller data amount thereafter. Note that, if a Web page or the like indicating that the program has been downloaded is presented, the member may try to access the content relay service device again by the downloaded decompression program. Alternatively, the downloaded decompression program can be easily started automatically.

### < Cache >

It is highly likely that the same Web content will be specified by a plurality of portable telephone sets. Needless to say, the same portable telephone set may specify the same Web content again. In such a case, it is not rational to obtain the same Web content for each access opportunity. Thus, the Web content that has been obtained temporarily is saved in a data amount reduced state for a certain period. Accordingly, time and load for obtaining the Web content and for the data amount reduction processing can be reduced, providing a nimbler service use environment to the member. Note that the saving period of the Web content may be properly set. Alternatively, a structure where an update of a cached Web content may be monitored, and regarding the updated Web content, cached data is abolished, and the same Web content may be obtained again when the same Web content is specified next time.

### < Specification System of URL >

In the foregoing embodiment, as the specification method of the Web content, the URL was written in a form. In place of this method, a list of Web contents capable of being obtained by the content relay service device side is prepared as a Web page. In the description portion of each Web content in the list, a link is set to a CGI for executing processing to obtain a relevant content, and to transfer the content after reducing the data amount. Accordingly, only by specifying an optional Web content in the list, the specified Web content is transmitted to the portable telephone set.

Further, if the number of members using the present service increases, the number of managers of Web contents wishing to be included in the list should also increase, with a possibility that the Web page presented by the content relay service device may develop to be a portal site. Accordingly, the member can obtain and use many Web contents at lower data communication fees, and further with an easy operation environment.

### < Service Rendering Type >

In the foregoing embodiment, it was assumed that the service receiver targeted by the content relay service device was registered as a member beforehand. Other than such a service rendering type, a type can be conceivable, which provides the present service to the user of the portable telephone set that has made access as a temporary member.

For example, to the portable telephone set that has made access, a form to enter personal information for specifying the user thereof is returned. Then, personal information entered by the portable telephone set is obtained, and the user thereof is authenticated as a member. Needless to say, it is possible to obtain the telephone number of the portable telephone set that has made access as personal information. Service use fees may be collected, such as, by sending a bill based on the obtained personal information. If a credit card number is obtained as personal information, in addition to an authentication procedure, payment of service use fees can be carried out on-line.

Note that it is highly likely that if the Web page presented by the content relay service device develops to be a portal site, and the present service is widely recognized by general users, advertisements may be inserted in the Web site, and the present service may be run based on advertisement incomes. If such a situation is established, the present service may be provided free of charge.

### < Browser Installed Terminal and the like >

The present invention is not limited to the portable telephone set, but it can be applied to any type of equipment as long as the equipment is a browser installed terminal, which makes access through the data amount charging type network, e.g., an equipment type having a portable telephone set connected to a notebook type PC. The application of the foregoing data compression system is not limited to the portable telephone set provided with the JAVA execution environment, but it can be applied to any equipment as long as it is a browser installed terminal capable of loading the compressed data decompression program. Of course, the data amount charging type network is not limited to the mobile radio communications network.

According to the present invention, an actually reduced data amount is recorded as a data amount reduction achievement while being correlated with each member, and then properly outputted. When the data amount reduction achievement is outputted to the member, a difference is exhibited between the case of using the service provided by the. invention and the case of not using the service. Thus, the operator of the content relay service device of the invention can obtain a reason for charging service use fees to the member for the present service, enabling the present service to be widely recognized by the general users as a business model for collecting use fees. The member can recognize that the present service fees are more reasonable than original data communication fees even after the payment of service rendering fees, motivating the member to use the fee-based service. If the member finds value in the fee-based use of the service, the number of members will be naturally increased, heightening a possibility that the present service is established as a business. Note that, if a difference in actual communication fees is presented based on a data amount reduction achievement, service effectiveness can be appealed more strongly.

On the other hand, if the data amount reduction achievement is outputted to the operator side, the reduction achievement data can be utilized to various business operations accompanying the present service, such as calculation of service use fees, a charging business, and the like. For example, service fees can be calculated according to the data amount reduction achievement, a charging system based on the reduced data amount charging system can be employed, and the member can surely save data communication fees by an amount equal to the use of the service.

Further, by recording a data amount reduction achievement for each member, service use fees can be charged to the member based on, for example, the reduced data amount charging system for calculating service fees according to the achievement.

A service type can be employed, where personal information of the user is obtained when the browser installed terminal makes access, and the user is treated as a temporary member. Thus, it is not necessary for the service receiver to register as a member beforehand.

For access from the browser installed terminal provided with the data compression function and the compressed data decompression function, the data of a specified Web content is compressed, and then transferred. In this way, data reduction efficiency can be increased.

By downloading the compressed data decompression program in the browser installed terminal capable of loading the compressed data decompression function, even the changing of the model of the browser installed terminal by the member can be flexibly dealt with.

Corresponding to the case where the same Web content is specified, the Web content can be cached in a data reduced state. Thus, the number of times of accessing the same Web contents or the number of data reduction operations is reduced, and a load placed on data processing is reduced. Moreover, because of the reduction of the load, a nimble service use environment can be provided to the member.

## Claims

1. A content relay service device for relay transferring a Web content opened to the public on the Internet while reducing a data amount thereof, comprising a computer information processing system connected to the Internet, wherein:
the content relay service device manages a member information database in which a member is registered, the member is a service receiver who uses a browser installed terminal subscribed to a communication service of a data amount charging type network connected to the Internet;
the content relay service device communicates with the browser installed terminal of the member which makes access thereto to authenticate the browser installed terminal, the authentication is performed by a predetermined authentication procedure with reference to the member information database;
a Web content "C" specified by the browser installed terminal "B" of the member "A" is obtained from the Internet, the obtained Web content "C" is processed by a data amount reducing mechanism, and a Web content "D" thus processed is transmitted to the browser installed terminal "B,"
a data reduction achievement is calculated when the Web content "C" is processed by the data amount reducing mechanism to be converted into the Web content "D," and data of the data reduction achievement is recorded while being correlated with the member "A" of the member information database; and
the data of the data reduction achievement for each member recorded in the member information database is edited and outputted in a predetermined manner.

2. A content relay service device according to claim 1, wherein the data of the data reduction achievement is edited in a reduction achievement report of a Web document form, and the reduction achievement report regarding the member "A" is presented according to a request from the browser installed terminal "B."

3. A content relay service device according to claim 1, wherein as a data reduction achievement when the Web content "C" is processed by the data amount reducing mechanism to be converted into the Web content "D," communication fees in the data amount charging type network corresponding to the reduced data amount is calculated.

4. A content relay service device according to claim 2, wherein as a data reduction achievement when the Web content "C" is processed by the data amount reducing mechanism to be converted into the Web content "D," communication fees in the data amount charging type network corresponding to the reduced data amount is calculated.

5. A content relay service device according to any one of claims 1 to 4, further comprising:
a specification information obtaining mechanism for obtaining specification information regarding a function provided in the browser installed terminal through communications with the terminal, which makes access; and
a terminal differentiating mechanism for differentiating the terminal into a type "a" loading a predetermined compressed data decompression program, and a type "b" loading no compressed data decompression program based on the specification information obtained from the browser installed terminal,
wherein the data amount reducing mechanism reduces a data amount of the Web content based on a system needing no compressed data decompression program for the browser installed terminal of the type "a," and reduces a data amount of the Web content based on a system including a predetermined compression algorithm for the browser installed terminal of the type "b."

6. A content relay service device according to claim 5, further comprising a program sending mechanism for sending the compressed data decompression program to the browser installed terminal, which makes access,
wherein
the terminal differentiating mechanism differentiates a terminal capable of loading the compressed data decompression program from the browser installed terminal of the type "a'', and the compressed data decompression program is downloaded for the differentiated terminal by the program sending mechanism.

7. A content relay service device according to any one of claims 1 to 4, further comprising:
a cache mechanism for saving the Web content "D" before data amount reduction processing for a predetermined period; and
a transmission mechanism for transmitting the Web content "D" saved in the cache mechanism when a certain browser installed terminal which makes access after authentication specifies the Web content "C" which is an origin of the Web content "D."

8. A content relay service device according to claim 5, further comprising:
a cache mechanism for saving the Web content "D" before data amount reduction processing for a predetermined period; and
a transmission mechanism for transmitting the Web content "D" saved in the cache mechanism when a certain browser installed terminal which makes access after authentication specifies the Web content "C" which is an origin of the Web content "D."

9. A content relay service device according to claim 6, further comprising:
a cache mechanism for saving the Web content "D" before data amount reduction processing for a predetermined period; and
a transmission mechanism for transmitting the Web content "D" saved in the cache mechanism when a certain browser installed terminal which makes access after authentication specifies the Web content "C" which is an origin of the Web content "D."

10. A content relay service device for relay transferring a Web content opened to the public on the Internet while reducing a data amount thereof, comprising a computer information processing system connected to the Internet, wherein:
a service receiver is a user of a browser installed terminal subscribed to a communication service of a data amount charging type network connected to the Internet;
the content relay service device communicates with the browser installed terminal of the user which makes access thereto to authenticate the browser installed terminal in which the user is a temporary member, the authentication is performed by a predetermined authentication procedure based on personal information of the user, obtained through the communication;
a Web content "C" specified by the browser installed terminal "B" of the temporary member "A" is obtained from the Internet, the obtained Web content "C" is processed by a data amount reducing mechanism, and a Web content "D" thus processed is transmitted to the browser installed terminal "B"; and
a data reduction achievement is calculated when the Web content "C" is processed by the data amount reducing mechanism to be converted into the Web content "D," and the data of the data reduction achievement is edited and outputted in a predetermined manner.

11. A content relay service device according to claim 10, wherein the data of the data reduction achievement is edited in a reduction achievement report of a Web document form, and the reduction achievement report regarding the member "A" is presented according to a request from the browser installed terminal "B."

12. A content relay service device according to claim 10, wherein as a data reduction achievement when the web content "C" is processed by the data amount reducing mechanism to be converted into the Web content "D," communication fees in the data amount charging type network corresponding to the reduced data amount is calculated

13. A content relay service device according to claim 11, wherein as a data reduction achievement when the Web content "C" is processed by the data amount reducing mechanism to be converted into the Web content "D," communication fees in the data amount charging type network corresponding to the reduced data amount is calculated.

14. A content relay service device according to any one of claims 10 to 13, further comprising:
a specification information obtaining mechanism for obtaining specification information regarding a function provided in the browser installed terminal through communications with the terminal, which makes access; and
a terminal differentiating mechanism for . differentiating the terminal into a type "a" loading a predetermined compressed data decompression program, and a type "b" loading no compressed data decompression program based on the specification information obtained from the browser installed terminal,
wherein the data amount reducing mechanism reduces a data amount of the Web content based on a system needing no compressed data decompression program for the browser installed terminal of the type "a," and reduces a data amount of the Web content based on a system including a predetermined compression algorithm for the browser installed terminal of the type "b."

15. A content relay service device according to claim 14, further comprising a program sending mechanism for sending the compressed data decompression program to the browser installed terminal, which makes access,
wherein
the terminal differentiating mechanism differentiates a terminal capable of loading the compressed data decompression program from the browser installed terminal of the type "a," and the compressed data decompression program is downloaded for the differentiated terminal by the program sending mechanism.

16. A content relay service device according to any one of claims 10 to 13, further comprising:
a cache mechanism for saving the Web content "D" before data amount reduction processing for a predetermined period; and
a transmission mechanism for transmitting the Web content "D" saved in the cache mechanism when a certain browser installed terminal which makes access after authentication specifies the Web content "C" which is an origin of the Web content "D."

17. A content relay service device according to claim 14, further comprising:
a cache mechanism for saving the Web content "D" before data amount reduction processing for a predetermined period; and
a transmission mechanism for transmitting the Web content "D" saved in the cache mechanism when a certain browser installed terminal which makes access after authentication specifies the Web content "C" which is an origin of the Web content "D."

18. A content relay service device according to claim 15, further comprising:
a cache mechanism for saving the Web content "D" before data amount reduction processing for a predetermined period; and
a transmission mechanism for transmitting the Web content "D" saved in the cache mechanism when a certain browser installed terminal which makes access after authentication specifies the Web content "C" which is an origin of the Web content "D."
